# EUROPÄISCHE PATENTSCHRIFT

(11) **EP 2 978 096 B1**
(45) Veröffentlichungstag und Bekanntmachung des Hinweises auf die Patenterteilung: **19.06.2019**
(21) Anmeldenummer: 14178562.6
(22) Anmeldetag: 25.07.2014
(51) Int. Cl.: H02J 3/24, H02J 13/00, G05B 19/042, H02J 3/00

(54) **Verfahren, System und Computerprogrammprodukt für das Steuern und/oder Regeln eines elektrischen Energiesystems**
Method, system and computer program product for controlling and/or regulating an electric energy system
Procédé, système et produit de programme informatique pour commander et/ou régler un système d'énergie électrique

(43) Veröffentlichungstag der Anmeldung: 27.01.2016
(73) Patentinhaber: Siemens Aktiengesellschaft, 80333 München (DE)
(72) Erfinder: Heyde, Chris Oliver, Dr., 91058 Erlangen (DE); Krebs, Rainer, Dr., 91052 Erlangen (DE); Lerch, Edwin, Dr., 91058 Erlangen (DE)

(56) Entgegenhaltungen:
- EP-A1- 1 381 132
- US-A1- 2011 022 240
- US-A1- 2013 120 105
- US-A1- 2013 345 999
- US-A1- 2014 001 847

## Beschreibung

Die Erfindung betrifft ein Verfahren für das Steuern und/oder Regeln eines elektrischen Energiesystems.

Bei dem Betrieb eines elektrischen Energiesystems muss gewährleistet sein, dass bei einer Störung einzelner Betriebsmittel des elektrischen Energiesystems die Stabilität des Energiesystems insgesamt erhalten werden kann.

Unter einem elektrischen Energiesystem im Sinne der Erfindung ist dabei jedes System zu verstehen, dass der Erzeugung, Übertragung oder dem Verbrauch elektrischer Energie dient. Ein elektrisches Energiesystem kann beispielsweise ein Mittelspannungs- oder ein Niederspannungsnetz sein oder eine Generatorenanordnung für die Erzeugung von elektrischer Energie.

Elektrische Energiesysteme unterliegen einer zunehmenden Auslastung aufgrund der Einspeisung elektrischer Energie aus regenerativen Energiequellen, wachsendem Energieverbrauch sowie zeitlich häufig wechselnden Lastsituationen durch Energiehandel. Durch einen in zu geringem Maße erfolgenden Ausbau von elektrischen Energiesystemen werden diese Probleme verstärkt.

Es kommt zu immer wiederkehrenden Verletzungen der stationären wie auch der dynamischen Stabilität. Zur Vermeidung großflächiger Abschaltungen und Blackouts nach Störungen sind sehr schnell auf die jeweilige Störung angepasste Maßnahmen zur Sicherung der Netzstabilität einzuleiten.

Es ist üblich, im Rahmen einer sogenannten "Day Ahead" Kraftwerkseinsatzplanung ein stationäres Engpassmanagement zu betreiben, um die stationäre (n-1)-Sicherheit für den Folgetag zu gewährleisten. Damit werden aber keine unvorhersehbaren Szenarien beherrscht.

Treten solche unvorhersehbaren Szenarien auf, werden Lastabwurfrelais eingesetzt, um die Auswirkungen von Störungen bzw. Havariesituationen einzudämmen. Diese Relais werden basierend auf Analysen, die beispielsweise aus so genannten offline-Studien gewonnen sein können, parametriert. So können standardisiert Maßnahmen zur Sicherung der Netzstabilität eingeleitet werden.

Ein Beispiel für den Einsatz von Relais ist der sogenannte 5-Stufen Lastabwurfplan des "European Network of Transmission System Operators for Electricity" (entso-e), bei dem im Energieverteilungsnetz Schalteinrichtungen der jeweiligen Stufe des Lastabwurfs fest zugeordnet sind. Wird eine Störung in einem Abschnitt des Energieversorgungsnetzes festgestellt, so wird entsprechend der ersten Stufe mittels der zugeordneten Schalteinrichtungen Last abgeworfen und die Auswirkung auf das Energieversorgungsnetz beobachtet. Besteht eine Gefährdung der Netzstabilität weiter, so wird entsprechend der nächsten Stufe noch mehr Last abgeworfen und so fort. Entscheidungskriterien für das Auslösen eines Lastabwurfs sind dabei lediglich lokale Messwerte von Spannung und Netzfrequenz, die auf fest vorgegebene Schwellwerte überwacht werden.

Ein solcher stufenweiser Lastabwurfplan ist fest parametriert und damit nicht auf die jeweilige Störung und den jeweiligen Betriebszustand angepasst, so dass mitunter zu viel oder zu wenig Last abgeworfen wird. Auch kann der Lastabwurf in einem falschen Abschnitt des elektrischen Energiesystems erfolgen. Außerdem kann der lokale Lastabwurf erst bei tiefen Frequenzen erfolgen, da zunächst die Systemantwort auf die Aktivierung von Generatorreserven abgewartet werden muss. Daher erfolgt der lokale Lastabwurf oft nicht ausreichend, um die Netzstabilität zu sichern. Darüber hinaus ist auch die Koordination in internationalen Verbundnetzen aus mehreren nationalen Energieverteilungsnetzen nicht immer gewährleistet. Auch ist ein solcher Lastabwurfplan oft nicht an den aktuellen Ausbauzustand des elektrischen Energiesystems angepasst. Ferner sind keine Koordination und keine Kombination von unterschiedlichen Maßnahmen möglich.

Ferner ist die Software SIGUARD "Phasor Data Processor" (PDP) der Siemens AG bekannt, bei der zeitsynschronisierte Phasormesswerte (Zeigermesswerte für Strom und Spannung) von einer Vielzahl von Phasor Measurement Units (PMUs) sehr schnell online bereit gestellt, zusammengefasst und in einer Datenbank gespeichert werden können.

Darüber hinaus ist aus dem Produktprospekt "SIGUARD Solutions, Dynamic security assessment with SIGUARD DSA", Stand 09.2013 sowie aus der dieses Produkt betreffenden Druckschrift EP 2052451 B1 ein Verfahren bekannt, bei dem, basierend auf dem aktuellen Systemzustand, simulativ das dynamische Verhalten eines elektrischen Energiesystems ermittelt wird. Auf diese Weise werden die Sicherheitsreserven eines elektrischen Energiesystems ständig neu ermittelt, um mögliche Auswirkungen von Betriebszuständen und Störungen frühzeitig zu erkennen und einem Benutzer Maßnahmen zur Verhinderung von Blackouts vorzuschlagen.

Ferner ist aus der Druckschrift US 2014/0001847 A1 ein gattungsgemäßes Verfahren bekannt. Aus der Druckschrift EP 1381132 A1 ist eine verbesserte Lastberechnung für ein Energieversorgungssystem bekannt.

An die Erfindung stellt sich die Aufgabe, ein Verfahren für das Steuern und/oder Regeln eines elektrischen Energiesystems bereit zu stellen, mit dem vergleichsweise schnell und gezielt Maßnahmen zur Sicherung der Stabilität des Energiesystems identifiziert und automatisch durchgeführt werden können.

Die Erfindung löst diese Aufgabe durch ein Verfahren gemäß Anspruch 1.

Phasormesseinrichtungen (PMUs) im Sinne der Erfindung sind Messeinrichtungen, die Zeigermessdaten für Strom und Spannung (d.h. unter Berücksichtigung der Phase) mit hoher zeitlicher Auflösung im ms-Bereich und einem hochgenauen Zeitstempel messen, der i.d.R. per GPS übermittelt wird. Mittels der PMUs ist eine räumlich weit ausgedehnte, synchrone Messung und eine erweiterte Analyse des Systemzustandes des Energiesystems möglich.

Als Datenspeicher können alle gängigen Speicher für digitale Daten verwendet werden, beispielswiese Festplatten, Arbeitsspeicher oder in einer Cloud lokalisierter Speicherplatz.

Als Datenverarbeitungsanordnung ist beispielsweise ein gängiger Computer, ein Application-specific integrated circuit (ASIC) oder eine Cloud-basierte Rechenanordnung einsetzbar.

Erfahrungsdaten werden beispielsweise aus vorbekannten Studien, so genannten offline-Studien, zur Stabilität des elektrischen Energiesystems gewonnen, dabei werden Untersuchungsergebnisse und/oder Simulationsergebnisse, wie sie beispielsweise von Netzbetreibern auf Basis langjähriger Erfahrung erstellt werden, berücksichtigt.

Die mehrdimensionale Entscheidungsmatrix ist eine Datenstruktur, in dem einem Systemzustand des elektrischen Energiesystems und einem möglichen Ereignis mindestens eine Maßnahme zur Sicherung der Stabilität des Energiesystems zugeordnet ist. Diese Maßnahme wird dann verfahrensgemäß automatisch umgesetzt, um - beispielsweise durch Lastabwurf mittels der Aktuatoren - das Energiesystem zu stabilisieren. Beispielsweise ist ein mögliches Ereignis der Ausfall eines bestimmten Transformators und der Systemzustand ein Zustand, der das Energiesystem bei Starklast charakterisiert.

Die Dimensionen der Entscheidungsmatrix beschreiben somit unter anderem mögliche Schaltungs- und Betriebszustände sowie Havariefälle im Energieverteilungsnetz, deren Auswirkungen durch die ermittelten Maßnahmen begegnet wird. Die Maßnahmen werden dabei aktiviert, bevor lokal gemessene Grenzwerte überschritten werden und ein Ausfall eines Abschnitts des elektrischen Energiesystems droht.

Das Füllen der Entscheidungsmatrix kann im einfachsten Fall durch vorbekannte Studien erfolgen.

Die nötige Reaktionsgeschwindigkeit wird beim erfindungsgemäßen Verfahren durch die konzeptgemäße Systemarchitektur und die echtzeitnahe Datenverarbeitung erreicht. Die nötige Qualität der Maßnahmen wird insbesondere durch die im laufenden Betrieb stattfindende kontinuierliche Verbesserung der Entscheidungsmatrix erreicht. Mittels der mehrdimensionalen Entscheidungsmatrix können sehr schnell Maßnahmen zur Wahrung der Systemintegrität des elektrischen Energiesystems aktiviert werden. Auf diese Weise wird sichergestellt, dass früh genug Maßnahmen ergriffen werden, um beispielsweise die wichtigen Systemparameter wie Spannung und Frequenz in einem für einen stabilen Netzbetrieb erforderlichen Bereich zu halten.

Es ist ein weiterer Vorteil des erfindungsgemäßen Verfahrens, dass aus verschiedenen Datenquellen (Erfahrungsdaten und Zeigermessdaten) die systemweite Situation kurz vor einer Havarie ermittelbar ist. Dabei werden Havarien mit vergleichsweise geringer Verzögerung durch PMU-Messungen erkannt. Die Entscheidungsfindung beruht maßgeblich auf netzweiten Informationen, weil die Erfahrungsdaten i.d.R. aus offline-Studien des Gesamtenergiesystems stammen, und nicht wie im Stand der Technik häufig noch (z.B. bei Lastabwurfplänen) üblich auf rein lokalen Messungen einzelner Abschnitte des Energieverteilungsnetzs.

Bekannte Verfahren beinhalten zwar eine Nutzung der primären Regelreserve von Generatoren bzw. anderen Energieerzeugungseinrichtungen sowie bei nicht ausreichender Regelreserve einen Lastabwurf durch Unterfrequenzrelais; dies führt jedoch oft zu tiefen Unterfrequenzen im Energiesystem, was nachteilig ist. Beispielsweise können zu tiefe Unterfrequenzen dazu führen, dass Generatorschutzgrenzen erreicht werden. Außerdem können hohe Frequenzgradienten dazu führen, dass Unterfrequenzrelais gar nicht auslösen. Beide genannten Beispiele führen zu einer Verschärfung der Probleme, weshalb eine dringende Notwendigkeit für kürzere Reaktionszeiten und präzisere Maßnahmen besteht.

Darüber hinausgehend ist es erfindungsgemäß möglich, sobald erkannt wird, dass die Regelreserve der Generatoren nicht ausreichend sein wird, zur Bekämpfung der Störung eine Aktivierung des gezielten Lastabwurfs bei gleichzeitiger Nutzung der primären Regelreserve gemeinsam und fein abgestimmt einzusetzen. Hierdurch kommt es gar nicht erst zu gefährlichen Unterfrequenzen. Weiterhin wird eine große Sicherheitsreserve zu ggf. zu befürchtenden Unterfrequenzabschaltungen von Generatoren eingehalten. Außerdem können alle bisher eingesetzten fest parametrierten Verfahren als zusätzliches Sicherheitsbackup weiterhin eingesetzt werden.

In einer bevorzugten Ausführungsform des erfindungsgemäßen Verfahrens werden die mittels Phasormesseinrichtungen gewonnenen Zeigermessdaten zusammengefasst und zur Auswertung über größere Zeitspannen in einem dritten Datenspeicher gespeichert. Hierdurch wird es möglich, Zeigermessdaten über längere Zeiträume zu archivieren. Dies ist ein Vorteil, weil anhand der Aufzeichnungen der Zeigermessdaten über längere Zeitspannen verbesserte Analysen der Netzstabilität erfolgen können.

In einer weiteren bevorzugten Ausführungsform des erfindungsgemäßen Verfahrens werden die zusammengefassten Zeigermessdaten zur Analyse eines Trends in der zeitlichen Entwicklung des möglichen Netzstabilitätsproblems verwendet. Dies ist ein Vorteil, weil anhand eines Trends schon frühzeitig auf Störungen im Energieverteilungsnetz reagiert werden kann, ggf. noch bevor ein Ausfall oder eine Überlastung drohen.

In einer weiteren bevorzugten Ausführungsform des erfindungsgemäßen Verfahrens werden die Maßnahmen zur Sicherung der Netzstabilität auf einem Ausgabegerät angezeigt. Dies ist ein Vorteil, weil ein Benutzer auf dem Ausgabegerät die korrekte Ausführung des Verfahrens im Hinblick auf eine Netzstabilisierung überwachen kann.

In einer weiteren bevorzugten Ausführungsform des erfindungsgemäßen Verfahrens werden die zusammengefassten Zeigermessdaten auf dem Ausgabegerät angezeigt. Dies ist ein Vorteil, weil ein Benutzer auf dem Ausgabegerät die aktuelle Situation des elektrischen Energiesystems im Hinblick auf Störungen überwachen kann.

In einer weiteren bevorzugten Ausführungsform des erfindungsgemäßen Verfahrens kann die mindestens eine Maßnahme zur Sicherung der Netzstabilität durch einen Benutzer blockiert werden. Dies ist ein Vorteil, weil auf diese Weise unerwünschte Maßnahmen unterbunden werden können.

In einer weiteren bevorzugten Ausführungsform des erfindungsgemäßen Verfahrens werden die Aktuatoren direkt angesteuert. Dies ist vorteilhaft, weil die Aktuatoren besonders schnell angesteuert werden können, um die mindestens eine Maßnahme schnell einzuleiten.

In einer weiteren bevorzugten Ausführungsform des erfindungsgemäßen Verfahrens werden die Aktuatoren über ein zwischengeschaltetes Netzleitsystem angesteuert. Dies ist ein Vorteil, weil ein vorhandenes Netzleitsystem mit seinen gegebenen Steuerungsmöglichkeiten genutzt werden kann.

In einer weiteren bevorzugten Ausführungsform des erfindungsgemäßen Verfahrens umfassen die Maßnahmen zur Sicherung der Stabilität des Energiesystems das Betätigen von Schaltern, insbesondere Leistungsschaltern, als Aktuatoren zum Abwerfen von Last im Energieverteilungsnetz. Dies ist vorteilhaft, weil so einzelne Abschnitte des elektrischen Energiesystems abgeschaltet werden können, um beispielsweise eine Überlastung und eine unzulässige Netzfrequenzabweichung zu vermeiden.

In einer weiteren bevorzugten Ausführungsform des erfindungsgemäßen Verfahrens umfassen die Maßnahmen zur Sicherung der Stabilität des Energiesystems das Steuern und/oder Regeln der Energieeinspeisung durch Energieerzeugungseinrichtungen als Aktuatoren. Dies ist ein Vorteil, weil so eine Überlastung und eine unzulässige Netzfrequenzabweichung vermieden werden kann, in dem mehr elektrische Energie zur Verfügung gestellt wird.

In einer weiteren bevorzugten Ausführungsform des erfindungsgemäßen Verfahrens umfassen die Maßnahmen zur Sicherung der Stabilität des Energiesystems eine Blindleistungsänderung zur Spannungsstützung im Energiesystem.

In einer weiteren bevorzugten Ausführungsform des erfindungsgemäßen Verfahrens umfassen die Maßnahmen zur Sicherung der Stabilität des Energiesystems eine vergleichsweise schnellere Aktivierung der Reserveleistung eines Generators, um die Netzfrequenz in einem vorgesehenen Bereich zu stabilisieren. Der vorgesehene Bereich ist beispielsweise 50 Hz +/- 1 Hz.

In einer weiteren bevorzugten Ausführungsform des erfindungsgemäßen Verfahrens umfassen die Maßnahmen zur Sicherung der Stabilität des Energiesystems die Aktivierung von elektronisch gesteuerten Energiespeichern, um die Netzfrequenz und die Netzspannung des Energiesystems in einen vorgesehenen Bereich zu stabilisieren.

In einer weiteren bevorzugten Ausführungsform des erfindungsgemäßen Verfahrens umfassen die Maßnahmen zur Sicherung der Stabilität des Energiesystems Topologieänderungen, um das Energiesystem zu stabilisieren.

In einer weiteren bevorzugten Ausführungsform des erfindungsgemäßen Verfahrens umfassen die Maßnahmen zur Sicherung der Stabilität des Energiesystems eine Inselbildung innerhalb des Energiesystems, um ein Teilnetz zu stabilisieren.

In einer weiteren bevorzugten Ausführungsform des erfindungsgemäßen Verfahrens werden mittels Spannungs- und Strommesseinrichtungen mit geringer zeitlicher Auflösung Werte für Strom und Spannung gemessen und bei der Auswahl des Systemzustandes und des Ereignisses berücksichtigt. Dies ist ein Vorteil, weil solche Spannungs- und Strommesseinrichtungen häufig schon zahlreich im Energieverteilungsnetz vorhanden sind und daher ergänzende Informationen auch aus Bereichen liefern können, in denen keine PMUs eingesetzt werden. Hierdurch wird das erfindungsgemäße Verfahren durch eine breitere Datengrundlage gestützt und präziser.

In einer weiteren bevorzugten Ausführungsform des erfindungsgemäßen Verfahrens werden als Spannungs- und Strommesseinrichtungen remote terminal units (RTUs) eingesetzt. Dies ist ein Vorteil, weil RTUs weit verbreitet sind.

In einer weiteren bevorzugten Ausführungsform des erfindungsgemäßen Verfahrens wird zusätzlich eine Zustandsschätzung eines Supervisory Control and Data Acquisition (SCADA) Systems für die Erstellung der Entscheidungsmatrix im Hinblick auf die Systemzustände verwendet. Dies ist ein Vorteil, weil SCADA Systeme oftmals bereits zur Steuerung des elektrischen Energiesystems vorhanden sind und anhand von Modellen Informationen über das Energieverteilungsnetz bereit stellen können. Hierdurch wird das erfindungsgemäße Verfahren durch eine breitere Datengrundlage gestützt und präziser. Jede andere Art eines Leitstellensystems, das eine Zustandsschätzung bereit stellen kann, ist ebenfalls geeignet.

In einer weiteren bevorzugten Ausführungsform des erfindungsgemäßen Verfahrens können zusätzlich manuell erstellte Eingaben in die Entscheidungsmatrix erfolgen. Dies ist ein Vorteil, weil auch das Erfahrungswissen eines Benutzers zur Verbesserung der Entscheidungsmatrix herangezogen werden kann. Die Erfindung betrifft ferner ein System für das Steuern und/oder Regeln eines Energieverteilungsnetzes und stellt sich die Aufgabe, ein solches System so auszugestalten, dass mit ihm vergleichsweise schnell und gezielt Maßnahmen zur Sicherung der Stabilität des Energiesystems identifiziert und automatisch durchgeführt werden können.

Die Lösung dieser Aufgabe gibt der Anspruch 12 wieder.

In einer bevorzugten Ausführungsform des erfindungsgemäßen Systems sind in einem dritten Datenspeicher die mittels der Phasormesseinrichtungen gewonnenen Zeigermessdaten zusammenfassbar und zur Auswertung über größere Zeitspannen speicherbar.

In einer weiteren bevorzugten Ausführungsform des erfindungsgemäßen Systems sind die Aktoren Leistungsschalter und/oder Energieerzeugungseinrichtungen.

In einer weiteren bevorzugten Ausführungsform des erfindungsgemäßen Systems ist ein Netzleitsystem zwischen die Aktuatoren und die Datenverarbeitungsanordnung geschaltet.

Dabei ergeben sich für das erfindungsgemäße System und seine Ausführungsformen sinngemäß die gleichen Vorteile wie eingangs für das erfindungsgemäße Verfahren geschildert. Weiterhin ist Gegenstand der Erfindung ein Datenverarbeitungsprogramm zum Ausführen in einer Datenverarbeitungsanordnung, wobei das Datenverarbeitungsprogramm Teile eines Quellcodes zum Durchführen des erfindungsgemäßen Verfahrens umfasst, wenn das Programm auf der Datenverarbeitungsanordnung läuft.

In einer bevorzugten Ausführungsform des erfindungsgemäßen Datenverarbeitungsprogramms ist das Datenverarbeitungsprogramm zum Ausführen auf einer Cloud-basierten Datenverarbeitungsanordnung geeignet.

Dabei ergeben sich für das erfindungsgemäße Datenverarbeitungsprogramm und seine Ausführungsformen sinngemäß die gleichen Vorteile wie eingangs für das erfindungsgemäße Verfahren geschildert.

Weiterhin betrifft die Erfindung ein Computerprogrammprodukt und stellt sich die Aufgabe, das erfindungsgemäße Verfahren mit einer Rechnereinrichtung ausführen zu können.

Zur Lösung dieser Aufgabe dient ein Computerprogrammprodukt, das in einem computerlesbaren Medium gespeichert ist und computerlesbare Programmmittel umfasst, mittels derer ein Computer als Datenverarbeitungsanordnung und/oder eine Cloud-basierte Datenverarbeitungsanordnung veranlasst werden, das erfindungsgemäße Verfahren durchzuführen, wenn das Computerprogrammprodukt auf dem Computer und/oder der Cloud-basierten Datenverarbeitungsanordnung läuft.

Es ergeben sich für das erfindungsgemäße Computerprogrammprodukt sinngemäß die gleichen Vorteile wie eingangs für das erfindungsgemäße Verfahren geschildert.

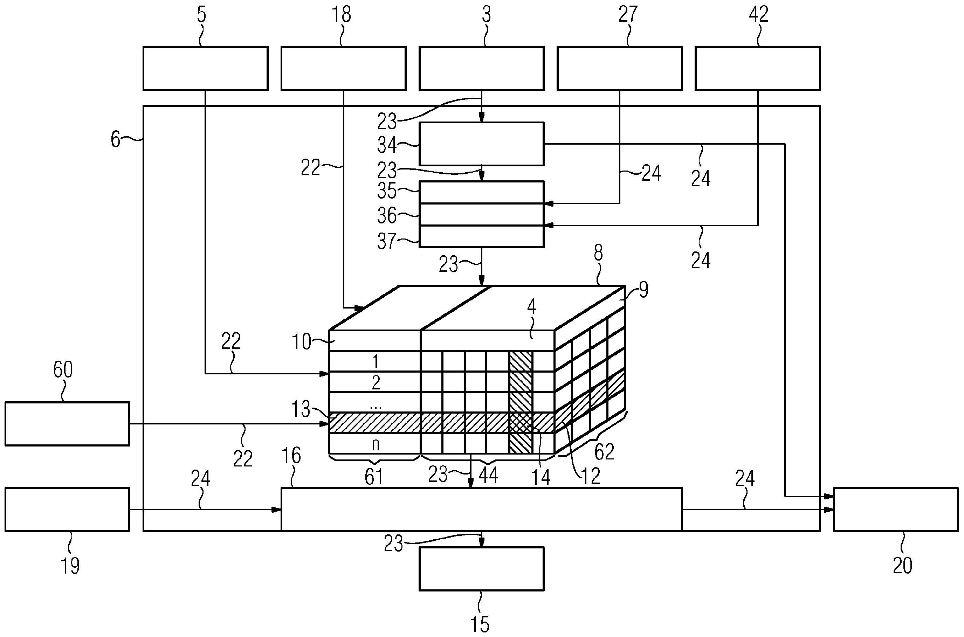

Zur weiteren Erläuterung der Erfindung ist in der
- Figur 1: ein Ausführungsbeispiel des erfindungsgemäßen Systems schematisch dargestellt.

Phasormesseinrichtungen sind über ein Energiesystem verteilt und liefern Zeigermessdaten 11 für Strom und Spannung mit hoher zeitlicher Auflösung und einem Zeitstempel (z.B. GPSsynchronsiert). Die Zeigermessdaten 11 können z.B. auch in einer ersten Auswerteeinrichtung gesammelt werden (nicht dargestellt).

Weiterhin sind im Energiesystem Aktuatoren 15 vorhanden, die beispielsweise Schalter, insbesondere Leistungsschalter, zum Abwerfen von Last im Energiesystem, und/oder Energieerzeugungseinrichtungen wie etwa Generatoren sein können.

Außerdem sind im Energiesystem Spannungs- und Strommesseinrichtungen vorhanden, die Messwerte für Strom und Spannung mit geringer zeitlicher Auflösung 42, wie sie beispielsweise durch Remote Terminal Units (RTUs) ermittelt werden. Die Messwerte 42 werden können dabei beispielsweise auch in einer zweiten Auswerteeinrichtung gesammelt werden (nicht dargestellt) .

Es ist ferner ein Netzleitsystem vorgesehen, dass Messdaten wie z.B. Zeigermessdaten 11 aus dem Energiesystem auswertet und anhand der Messdaten eine Zustandsschätzung 27 im Hinblick auf das Energiesystem erstellt.

Es ist dabei in einer Variante der Erfindung möglich, dass die erste und die zweite Auswerteeinrichtung in das Netzleitsystem integriert sind, so dass auch die Zeigermessdaten 11 und die Messwerte für Strom und Spannung mit geringer zeitlicher Auflösung 42 im Netzleitsystem zusammen erfasst werden. Das Netzleitsystem kann ein Supervisory Control and Data Acquisition (SCADA) System umfassen.

In einem ersten Datenspeicher liegen Erfahrungsdaten 5 vor, die beispielsweise so genannte offline-studies des elektrischen Energiesystems umfassen. Bei offline-studies werden mittels Simulationen des elektrischen Energiesystems Systemzustände und dazu auftretende Ereignisse dargestellt, also beispielsweise bestimmte Spannungs- und Phasenwerte an bestimmten Messstellen im Energiesystem und ein Ereignis, dass z.B. eine Störung im Hinblick auf die Netzstabilität sein kann. Eine solche Störung ist beispielsweise ein Ausfall eines Transformators. Die Erfahrungsdaten umfassen dabei auch geeignete Maßnahmen, um einer Störung entgegen zu wirken.

Ein aus den Erfahrungsdaten 5 ableitbarer Fall wäre es, einem Ausfall eines bestimmten Transformators bei einem bestimmten Lastzustand eines Mittelspannungsnetzes derart entgegen zu wirken, dass kein netzweiter Blackout auftritt. Dabei umfassen die Angaben zum Systemzustand beispielsweise Spannungs- und Phaseninformationen, insbesondere auffällige Winkelsprünge.

Eine geeignete in den Erfahrungsdaten aufgeführte Maßnahme ist in einem solchen Fall ein Lastabwurf an bestimmten Stellen des Mittelspannungsnetzes.

Im Gegensatz zu aus dem Stand der Technik bekannten rein lokalen Messungen mit lokalen, mehrstufigen Lastabwurfplänen sind die Maßnahmen in den Erfahrungsdaten 5 mit Blick auf das gesamte Energiesystem derart bestimmt, dass mit einer Maßnahme gezielt und unter Berücksichtigung des Energiesystemverhaltens (z.B. verspäteter Generatorantworten) die Störung bekämpft werden kann.

Eine weitere Möglichkeit zur Erfassung von Informationen über das Energiesystem besteht darin, mittels Simulationssoftware - z.B. in einer dritten Auswerteeinrichtung - eine Zustandsschätzung 18 des elektrischen Energiesystems vorzunehmen und diese anhand von Messwerten wie etwa Zeigermessdaten 11 und Messwerten für Strom und Spannung mit geringer zeitlicher Auflösung 42 ständig zu aktualisieren. Eine solche Zustandsschätzung 18 erlaubt es, weit mehr unterschiedliche Systemzustände zu erfassen, als in den offline-studies aufgeführt sind. Diese Zustandsschätzung 18 spiegelt die Sicherheitsreserven des elektrischen Energiesystems wieder. Die dritte Auswerteeinrichtung kann dabei in einer alternativen Ausgestaltung auch Teil des Netzleitsystem oder der im Folgenden beschriebenen Datenverarbeitungsanordnung 6 sein.

Im Folgenden werden Datenübertragungsverbindungen, die jeweils mit einer vergleichbaren zeitlichen Taktung aktualisierte Daten bereit stellen, mit den gleichen Bezugszeichen versehen. Eine Datenübertragungsverbindung 23 stellt ca. im Millisekundentakt aktualisierte Daten bereit, eine Datenübertragungsverbindung 24 stellt ca. im Sekundentakt aktualisierte Daten bereit und eine Datenübertragungsverbindung 21 stellt ca. im Minutentakt aktualisierte Daten bereit. Weiterhin gibt es Datenübertragungsverbindungen 22, die nur im Bereich von Tagen oder Monaten, ggf. sogar nur einmalig, Daten bereit stellen.

Es ist eine Datenverarbeitungsanordnung 6 vorgesehen, die beispielsweise einen Computer, ein Computernetzwerk oder ein Cloud-basiertes Datenverarbeitungssystem umfassen kann.

Innerhalb der Datenverarbeitungsanordnung 6 laufen weitere erfindungsgemäße Verfahrensschritte ab. Einzelne Verfahrensschritte können jedoch auch auf separaten Datenverarbeitungsanordnungen und/oder mit separaten Datenspeichern ausgeführt werden.

In der Datenverarbeitungsanordnung 6 ist ein zweiter Datenspeicher vorhanden, in dem eine mehrdimensionale Entscheidungsmatrix 8 erstellt wird. Die Entscheidungsmatrix 8 weist im dargestellten Beispiel zwei Dimensionen auf. Komplexere Maßnahmen können in einer höheren Dimensionalität der Entscheidungsmatrix 8 berücksichtigt werden, so dass noch weitere Aspekte des Betriebs des Energiesystems dargestellt werden können.

Es werden jeweils aus den Erfahrungsdaten 5 abgeleitet als eine erste Dimension Systemzustände 9 des Energiesystems und als eine zweite Dimension mögliche Ereignisse 10 im Energiesystem in die Entscheidungsmatrix 8 eingetragen, wobei den Systemzuständen 9 und den Ereignissen 10 jeweils mindestens eine Maßnahme 44 zur Sicherung der Stabilität des Energiesystems zugeordnet ist. Auch die mindestens eine Maßnahme 14,44 ist daher in diesem Beispiel aus den Erfahrungsdaten 5 bzw. offline-studies abgeleitet.

Die Entscheidungsmatrix 8 kann jedoch auch noch aus weiteren Quellen mit Informationen versehen werden. Es kann beispielsweise anhand der Zustandsschätzung 18 eine größere Anzahl unterschiedlicher Systemzustände 9 in der Entscheidungsmatrix 8 eingetragen werden, so dass vorteilhafterweise die Unterscheidung von Systemzuständen 9 feiner gestaltet wird.

Ferner kann eine manuelle Eingabe von Informationen 60 direkt in die Entscheidungsmatrix 8 erfolgen. Solch eine Direkteingabe wird in der Regel nur im Bereich von Tagen und Monaten aktualisiert werden. Dies erlaubt es einem erfahrenen Benutzer wie etwa einem Leitstellentechniker, eigene Erfahrungswerte über den Umgang mit Störungen in die Entscheidungsmatrix einzustellen und damit auch sein Wissen reproduzierbar nutzbar zu machen. Eine solche Eingabe kann beispielsweise sein, wie beim Ausfall eines bestimmten Teils des Netzes mit geeigneten Maßnahmen regiert werden muss.

Nach der Befüllung mit Systemzuständen 9, Ereignissen 10 und Maßnahmen 44 stellt die Entscheidungsmatrix 8 die Grundlage für ein Expertensystem zur Sicherung der Stabilität des Energiesystems dar. Im dargestellten Beispiel enthält die Entscheidungsmatrix 8 ganz links auf dem gezeigten Quader eine Spalte 61 mit Ereignissen 10, die mit 1,2 bis n nummeriert sind. Außerdem enthält die die Entscheidungsmatrix 8 ganz rechts auf der Seitenwand 62 des Quaders eine Vielzahl von Systemzuständen 9, wobei jedem Ereignis 10 in einer Zeile mehrere Systemzustände 9 zugeordnet sind. Auf der Vorderseite des Quaders sind die Maßnahmen 44 gezeigt, die jeweils einem Ereignis 10 und einem Systemzustand 9 zugeordnet sind.

Liegt die Entscheidungsmatrix 8 vor, ist nun anhand von aktuellen Messdaten wie z.B. Zeigermessdaten 11 aus dem Energiesystem jeweils der aktuelle Systemzustand 12 und das aktuelle Ereignis 13 in der Entscheidungsmatrix 8 zu bestimmen, um eine geeignete Maßnahme 14 auswählen zu können.

Diese Zuordnung geschieht anhand der Zeigermessdaten 11. Die Zeigermessdaten 11 werden im Schritt 34 zu zusammengefassten Zeigermessdaten zusammengefasst und anschließend beispielsweise zur Auswertung über größere Zeitspannen in einem dritten Datenspeicher gespeichert. Die zusammengefassten Zeigermessdaten werden außerdem auf einer Anzeigeeinrichtung 20 für den Benutzer 19 dargestellt, damit der Benutzer 19 jederzeit Informationen über den aktuellen Zustand des Energiesystems überwachen kann.

Dann werden die zusammengefassten Zeigermessdaten im Schritt 35 dahingehend untersucht, ob ein Ereignis wie etwa eine Störung im elektrischen Energiesystem vorliegt. Ein Ereignis ist z.B. der Ausfall eines Transformators oder eine Leistungspendelung im Energiesystem. In diesen Schritt 35 kann auch die vom Netzleitsystem bereit gestellte Zustandsschätzung 27 einbezogen werden, um ein Ereignis zu erkennen.

In einem Schritt 36 werden Indizes für die Entscheidungsmatrix 8 kalkuliert, um den korrekten Systemzustand und das korrekte mögliche Ereignis zu identifizieren. Hierdurch kann eine geeignete Maßnahme zur Sicherung der Netzstabilität innerhalb der Entscheidungsmatrix 8 zugeordnet werden. Im gezeigten Beispiel liegt das stabilitätsmäßig kritische Ereignis im Feld 13 vor, in der Zusammenschau mit dem Systemzustand 12 ergibt sich die Maßnahme 14. Diese Maßnahme 14 zur Sicherung der Stabilität des Energiesystems wird über die Anzeigeeinrichtung 20 angezeigt.

Weiterhin erfolgt in einem Schritt 37 eine Analyse eines Trends in den zusammengefassten Zeigermessdaten, um sich verstärkende Netzwerkstabilitätsprobleme frühzeitig erkennen zu können und entsprechend Maßnahmen einzuleiten. Beispielsweise kann so eine sich aufschaukelnde Leistungspendelung erkannt werden, noch bevor ein kritisches Ereignis eintritt. Dies ist vorteilhaft, weil so mehr Zeit für Gegenmaßnahmen zur Verfügung steht.

Die Schritte 34 bis 37 können in einer alternativen Ausgestaltung auch einer Ereigniserkennungseinrichtung zusammengefasst sein und beispielsweise als separate Datenverarbeitungseinrichtung oder als eine Software innerhalb der Datenverarbeitungsanordnung 6 ausgeprägt sein.

Die ausgewählte Maßnahme 14 wird in einem Schritt 16 für die Umsetzung aktiviert. Diese Aktivierung kann durch den Benutzer 19 blockiert werden, z.B. weil der Benutzer 19 eine Fehlfunktion erkennt oder selbst andere Maßnahmen einleiten möchte.

Erfolgt solch eine Blockade nicht, wird die aktivierte Maßnahme 14 automatisch mindestens einem Aktuator 15 mitgeteilt, der beispielsweise ein Leistungsschalter oder eine Energieerzeugungseinrichtung sein kann. Die Maßnahme 14 wird automatisch umgesetzt und kann z.B. einen geeigneten Lastabwurf mittels eines Leistungsschalters sein.

Durch das erfindungsgemäße System können somit eine Vielzahl unterschiedlicher Informationen, die in unterschiedlichen Datenformaten gemäß verschiedenster Standards vorliegen, verarbeitet werden. Beispielsweise können Zeigermessdaten 11, die durch Phasormesseinrichtungen gewonnen werden, mittels des IEEE Standards C37.118 übermittelt werden. Die Zustandsschätzung 18 kann beispielsweise gemäß des Standards CIM PSS/E vorliegen. Die mittels der RTUs gewonnen Daten können beispielsweise gemäß IEC 60 870 - 5 vorliegen. Die Umsetzung der Maßnahme 14 beziehungsweise die Übermittlung der Maßnahme 14 an einen Aktuator 15 kann mittels des Standards IEC/61 850 erfolgen.

## Patentansprüche

1. Verfahren für das Steuern und/oder Regeln eines elektrischen Energiesystems, bei dem
mittels in einem ersten Datenspeicher bereitgestellter Erfahrungsdaten zur Stabilität des Energiesystems und
mittels einer mit Hilfe einer Datenverarbeitungsanordnung (6) in einem zweiten Datenspeicher erstellten mehrdimensionalen Entscheidungsmatrix (8), die jeweils aus den Erfahrungsdaten (5) abgeleitet als eine erste Dimension Systemzustände (9) des Energiesystems und als eine zweite Dimension mögliche Ereignisse (10) im Energiesystem enthält, wobei den Systemzuständen (9) und den Ereignissen (10) jeweils mindestens eine Maßnahme (14,44) zur Sicherung der Stabilität des Energiesystems zugeordnet ist, und wobei Zeigermessdaten (11) für Strom und Spannung mit hoher zeitlicher Auflösung und einem Zeitstempel erfasst werden, die jeweils mit Hilfe von im Energiesystem verteilten Phasormesseinrichtungen gewonnen werden, **dadurch gekennzeichnet, dass**
mittels der Datenverarbeitungsanordnung (6) anhand der Zeigermessdaten (11) ein Systemzustand (12) und ein Ereignis (13) ausgewählt werden, so dass mindestens eine Maßnahme (14) ausgewählt und zur Sicherung der Stabilität des Energiesystems automatisch mittels Aktuatoren (15) im Energiesystem ausgeführt wird, und dass
die Maßnahmen (14,44) zur Sicherung der Netzstabilität das Steuern und/oder Regeln der Energieeinspeisung in das elektrische Energiesystem durch Energieerzeugungseinrichtungen als Aktuatoren (15) umfassen.

2. Verfahren nach Anspruch 1, bei dem die mittels Phasormesseinrichtungen gewonnenen Zeigermessdaten (11) zusammengefasst und zur Auswertung über größere Zeitspannen in einem dritten Datenspeicher gespeichert werden.

3. Verfahren nach Anspruch 2, bei dem die zusammengefassten Zeigermessdaten zur Analyse eines Trends in der zeitlichen Entwicklung des möglichen Ereignisses (10) verwendet werden (37) .

4. Verfahren nach einem der vorhergehenden Ansprüche, bei dem die Maßnahmen (14,44) zur Sicherung der Stabilität das Betätigen von Schaltern, insbesondere Leistungsschaltern, als Aktuatoren (15) zum Abwerfen von Last im Energiesystem umfassen.

5. Verfahren nach einem der vorhergehenden Ansprüche, bei dem die Maßnahmen (14,44) zur Sicherung der Stabilität des Energiesystems eine Blindleistungsänderung zur Spannungsstützung im Energiesystem umfassen.

6. Verfahren nach einem der vorhergehenden Ansprüche, bei dem die Maßnahmen (14,44) zur Sicherung der Stabilität des Energiesystems eine vergleichsweise schnellere Aktivierung der Reserveleistung eines Generators, um die Netzfrequenz in einem vorgesehenen Bereich zu stabilisieren, umfassen.

7. Verfahren nach einem der vorhergehenden Ansprüche, bei dem die Maßnahmen (14,44) zur Sicherung der Stabilität des Energiesystems die Aktivierung von elektronisch gesteuerten Energiespeichern, um die Netzfrequenz und die Netzspannung des Energiesystems in einen vorgesehenen Bereich zu stabilisieren, umfassen.

8. Verfahren nach einem der vorhergehenden Ansprüche, bei dem die Maßnahmen (14,44) zur Sicherung der Stabilität des Energiesystems Topologieänderungen, um das Energiesystem zu stabilisieren, umfassen.

9. Verfahren nach einem der vorhergehenden Ansprüche, bei dem die Maßnahmen (14,44) zur Sicherung der Stabilität des Energiesystems eine Inselbildung innerhalb des Energiesystems, um ein Teilnetz zu stabilisieren, umfassen.

10. Verfahren nach einem der vorhergehenden Ansprüche, bei dem mittels Spannungs- und Strommesseinrichtungen mit geringer zeitlicher Auflösung Werte für Strom und Spannung gemessen (42) und bei der Auswahl des Systemzustands (12) und des Ereignisses (13) berücksichtigt werden.

11. Verfahren nach einem der vorhergehenden Ansprüche, bei dem zusätzlich eine Zustandsschätzung (27) eines Netzleitsystems, insbesondere eines Supervisory Control and Data Acquisition (SCADA) Systems, bei der Auswahl des Systemzustands (12) und des Ereignisses (13) berücksichtigt werden.

12. System für das Steuern und/oder Regeln eines elektrischen Energiesystems, aufweisend:
im elektrischen Energiesystem verteilte Phasormesseinrichtungen für das Gewinnen von Zeigermessdaten (11) mit hoher zeitlicher Auflösung und einem Zeitstempel und
einen ersten Datenspeicher, in dem Erfahrungsdaten (5) zur Stabilität des Energiesystems bereit stellbar sind; und
eine Datenverarbeitungsanordnung (6) mit einem zweiten Datenspeicher, in dem eine mehrdimensionale Entscheidungsmatrix (8) erstellbar ist, die jeweils aus den Erfahrungsdaten (5) abgeleitet als eine erste Dimension Systemzustände (9) des Energiesystems und als eine zweite Dimension mögliche Ereignisse (10) im Energiesystem enthält, wobei den Systemzuständen (9) und den Ereignissen (10) jeweils mindestens eine Maßnahme (44) zur Sicherung der Stabilität des Energiesystems zuordenbar ist,
**dadurch gekennzeichnet, dass**
mittels der Datenverarbeitungsanordnung (6) anhand der Zeigermessdaten (11) ein Systemzustand (12) und ein Ereignis (13) auswählbar sind, so dass mindestens eine Maßnahme (14) auswählbar ist; und
Aktuatoren (15), mittels derer die ausgewählte Maßnahme (14) zur Sicherung der Stabilität des Energiesystems automatisch im Energiesystem ausgeführt wird, wobei die Maßnahmen (14,44) zur Sicherung der Netzstabilität das Steuern und/oder Regeln der Energieeinspeisung in das elektrische Energiesystem durch Energieerzeugungseinrichtungen als Aktuatoren (15) umfassen.

13. Computerprogrammprodukt, das in einem computerlesbaren Medium gespeichert ist und computerlesbare Programmmittel umfasst, mittels derer ein Computer als Datenverarbeitungsanordnung (6) und/oder eine Cloud-basierte Datenverarbeitungsanordnung veranlasst werden, dass das System des Anspruchs 12 ein Verfahren nach einem der Ansprüche 1 bis 11 durchführt, wenn das Computerprogrammprodukt auf dem Computer und/oder der Cloud-basierten Datenverarbeitungsanordnung läuft.

## Claims

1. Method for controlling and/or regulating an electric energy system, in which
by means of empirical data on the stability of the energy system provided in a first data storage device, and
by means of a multidimensional decision matrix (8) created in a second data storage device using a data-processing arrangement (6), wherein a first dimension of said decision matrix contains system states (9) of the energy system and a second dimension contains possible events (10) in the energy system, in each case derived from the empirical data (5), wherein in each case at least one measure (14, 44) for ensuring the stability of the energy system is assigned to the system states (9) and the events (10), and wherein phasor measurement data (11) for current and voltage with high temporal resolution and a time stamp are recorded, each of which are obtained by means of phasor measuring devices distributed in the energy system, **characterized in that**
by means of the data processing arrangement (6) and on the basis of phasor measurement data (11), a system state (12) and an event (13) are selected, so that at least one measure (14) is selected and is automatically implemented by means of actuators (15) in the energy system to secure the stability of the energy system, and that
the measures (14, 44) for securing the stability of the network comprise controlling and/or regulating the energy supply into the electric energy system by means of energy generating devices as actuators (15).

2. Method according to Claim 1, in which the phasor measurement data (11) obtained by means of phasor measurement devices are summarized and stored in a third data storage device for evaluation over larger time intervals.

3. Method according to Claim 2, in which the summarized phasor measurement data are used (37) for analyzing a trend in the chronological development of the possible event (10).

4. Method according to any of the previous claims, in which the measures (14, 44) for securing the stability comprise actuating switches, in particular power circuit-breakers, as actuators (15) for shedding load in the energy system.

5. Method according to any of the previous claims, in which the measures (14, 44) for securing the stability of the energy system comprise a change in reactive power for voltage support in the energy system.

6. Method according to any of the previous claims, in which the measures (14, 44) for ensuring the stability of the energy system comprise a comparatively faster activation of the reserve power of a generator, in order to stabilize the network frequency in a designated range.

7. Method according to any of the previous claims, in which the measures (14, 44) for securing the stability of the energy system comprise the activation of electronically controlled energy accumulators to stabilize the mains frequency and the supply voltage of the energy system in a designated range.

8. Method according to any of the previous claims, in which the measures (14, 44) for securing the stability of the energy system comprise topology changes, in order to stabilize the energy system.

9. Method according to any of the previous claims, in which the measures (14, 44) for securing the stability of the energy system comprise forming islands within the energy system, in order to stabilize a sub-network.

10. Method according to any of the previous claims, in which by means of voltage and current measuring devices with low temporal resolution, values for current and voltage are measured (42) and taken into account in the selection of the system status (12) and the event (13).

11. Method according to any of the previous claims, in which a status estimate (27) of a network regulation system, in particular of a Supervisory Control and Data Acquisition (SCADA) system, is additionally taken into account in the selection of the system status (12) and the event (13).

12. System for controlling and/or regulating an electric energy system, comprising:
phasor measurement devices distributed in the electric energy system for obtaining phasor measurement data (11) with high temporal resolution and with a time stamp, and
a first data storage device in which empirical data (5) on the stability of the energy system can be provided; and
a data-processing arrangement (6) having a second data storage device, in which a multi-dimensional decision matrix (8) can be created, a first dimension of which contains system states (9) of the energy system and a second dimension contains possible events (10) in the energy system, in each case derived from the empirical data (5), wherein in each case at least one measure (44) for ensuring the stability of the energy system is assigned to the system states (9) and the events (10),
**characterized in that**
by means of the data processing arrangement (6), on the basis of phasor measurement data (11) one system state (12) and one event (13) can be selected so that at least one measure (14) can be selected; and
actuators (15), by means of which the selected measure (14) for securing the stability of the energy system is automatically implemented in the energy system, wherein the measures (14, 44) for securing the stability of the network comprise controlling and/or regulating the energy supply into the electric energy system by means of energy generating devices as actuators (15).

13. Computer program product which is stored in a computer-readable medium and comprises computer-readable program means, by means of which a computer as a data processing arrangement (6) and/or a cloud-based data processing arrangement are caused to prompt the system of Claim 12 to carry out a method according to any of the Claims 1 to 11, when the computer program product is running on the computer and/or the cloud-based data processing arrangement.

## Revendications

1. Procédé de commande et/ou de réglage d'un système d'énergie électrique, dans lequel
au moyen de données d'expérience, pour la stabilité du système d'énergie, mises en mémoire dans une mémoire de données, et au moyen d'une matrice (8) de décision pluridimensionnelle, qui est établie dans une deuxième mémoire de données à l'aide d'un système (6) de traitement de données et qui contient, respectivement, déduits des données (5) d'expérience, sous la forme d'une première dimension, des états (9) de système du système d'énergie, et, sous la forme d'une deuxième dimension, des évènements (10) possibles dans le système d'énergie, respectivement au moins une mesure (14, 44) pour assurer la stabilité du système d'énergie étant associée aux états (9) d'énergie et aux évènements (10) et dans lequel on détecte des données (11) de mesure vectorielles du courant et de la tension, avec une grande résolution dans le temps et un horodatage, que l'on obtient, respectivement, à l'aide de dispositifs de mesure de phase répartie dans le système d'énergie,
**caractérisé en ce que**,
au moyen du système (6) de traitement de données, à l'aide des données (11) de mesure vectorielles, on choisit un état (12) du système et un évènement (13), de manière à choisir au moins une mesure (14) et, pour assurer la stabilité du système d'énergie, à l'exécuter automatiquement au moyen d'actionneurs (15) dans le système d'énergie et **en ce que** les mesures (14, 44) pour assurer la stabilité du réseau comprennent la commande et/ou le réglage de l'injection d'énergie dans le système d'énergie électrique, par des dispositifs de production d'énergie, comme actionneurs (15).

2. Procédé suivant la revendication 1, dans lequel on rassemble les données (11) de mesure vectorielles obtenues au moyen de dispositifs de mesure de phase et on les mémorise dans une troisième mémoire de données pour exploitation sur des laps de temps plus grands.

3. Procédé suivant la revendication 2, dans lequel on utilise (37) les données de mesure vectorielles rassemblées pour l'analyse d'une tendance de l'évolution dans le temps de l'évènement (10) possible.

4. Procédé suivant l'une des revendications précédentes, dans lequel les mesures (14, 44) pour assurer la stabilité comprennent l'actionnement d'interrupteurs, notamment de disjoncteurs, comme actionneurs (15) pour le rejet de charge du système d'énergie.

5. Procédé suivant l'une des revendications précédentes, dans lequel les mesures (14, 44) pour assurer la stabilité du système d'énergie comprennent une variation de la puissance réactive pour soutenir la tension du système d'énergie.

6. Procédé suivant l'une des revendications précédentes, dans lequel les mesures (14, 44) pour assurer la stabilité du système d'énergie comprennent une activation relativement plus rapide de la puissance en réserve d'une génératrice, afin de stabiliser la fréquence du réseau dans une plage prévue.

7. Procédé suivant l'une des revendications précédentes, dans lequel les mesures (14, 44) pour assurer la stabilité du système d'énergie comprennent l'activation d'accumulateurs d'énergie commandés électroniquement, afin de stabiliser la fréquence du réseau et la tension du réseau du système d'énergie dans une plage prévue.

8. Procédé suivant l'une des revendications précédentes, dans lequel les mesures (14, 44) pour assurer la stabilité du système d'énergie comprennent des variations de topologie, afin de stabiliser le système d'énergie.

9. Procédé suivant l'une des revendications précédentes, dans lequel les mesures (14, 44) pour assurer la stabilité du système d'énergie comprennent une formation d'îlot au sein du système d'énergie pour stabiliser un sous-réseau.

10. Procédé suivant l'une des revendications précédentes, dans lequel, au moyen de dispositifs de mesure de tension et de courant à petite résolution dans le temps, on mesure des valeurs du courant et de la tension et on en tient compte dans le choix de l'état (12) du système et de l'événement (13).

11. Procédé suivant l'une des revendications précédentes, dans lequel on prend en compte supplémentairement une estimation (27) d'état d'un système de gestion du réseau, notamment d'un système Supervisory Control and Data Acquisition (SCADA) lors du choix de l'état (12) du système et de l'événement (13).

12. Système de commande et/ou de réglage d'un système d'énergie électrique, comprenant :
des dispositifs de mesure de phase répartis dans le système d'énergie électrique pour obtenir des données (11) de mesure vectorielles avec une grande résolution dans le temps et un horodatage et
une première mémoire de données, dans laquelle des données (5) d'expérience pour la stabilité du système d'énergie peuvent être mises à disposition et un système (6) de traitement de données comprenant une deuxième mémoire de données, dans laquelle peut être établie une matrice (8) de décision pluridimensionnelle, qui, respectivement, contient, déduits des données (5) d'expérience, comme une première dimension, des états (9) de système du système d'énergie et, comme une deuxième dimension, des évènements (10) possibles dans le système d'énergie, respectivement au moins une mesure (4) pour assurer la stabilité du système d'énergie pouvant être associée aux états (9) du système et aux évènements (10),
**caractérisé en ce que**,
au moyen du système (6) de traitement de données, à l'aide des données (11) de mesure vectorielles, un état (12) du système et un évènement (13) peuvent être choisis, de manière à pouvoir choisir au moins une mesure (14) et
par des actionneurs (15), au moyen desquels la mesure (14) choisie pour assurer la stabilité du système d'énergie est réalisée automatiquement dans le système d'énergie, les mesures (14, 44) pour assurer la stabilité du réseau comprenant la commande et/ou le réglage de l'injection d'énergie dans le système d'énergie électrique par des dispositifs de production d'énergie, comme actionneurs (15).

13. Produit de programme d'ordinateur, qui est mémorisé dans un support déchiffrable par ordinateur et qui comprend des moyens de programme déchiffrables par ordinateur, au moyen desquels un ordinateur, comme système (6) de traitement de données et/ou un système de traitement de données reposant sur le cloud fait que le système de la revendication (12) effectue un procédé suivant l'une des revendications 1 à 11, lorsque le produit de programme d'ordinateur passe sur l'ordinateur et/ou sur le système de traitement de données reposant sur le cloud.
